# EUROPEAN PATENT APPLICATION

(11) **EP 1 554 960 A1**
(43) Date of publication of application: **20.07.2005**
(21) Application number: 05250143.4
(22) Date of filing: 13.01.2005
(51) Int. Cl.: A47J 37/06

(54) **Assembly and method for making flower-shaped waffles**

(30) Priority: 15.01.2004 US 536868 P
(71) Applicant: Tilia International, Inc., San Francisco, California 94107 (US)
(72) Inventor: Albritton, Charles Wade, California 94547 (US); Small, Steven, California 94947 (US); Patterson, Jesse Frost, California 94044 (US)
(74) Representative: Merrifield, Sarah Elizabeth

(57) **Abstract**

A method and appliance (100) for making three-dimensional flower-shaped waffles (108, 110, 112) is described. The three-dimensional flower-shaped waffles (108, 110, 112) have contoured surfaces that define, among other features, the petals of the flower. The underside of flower-shaped waffle (108, 110, 112) includes pyramidal wells that are shaped to allow for even cooking of the flower-shaped waffle (108, 110, 112).

## Description

### FIELD OF THE INVENTION

The present invention generally relates to food preparation technology. More particularly, the invention is directed to making three-dimensional flower-shaped waffles with contoured surfaces that define, among other features, the petals of the flower. The underside of flower-shaped waffle includes pyramidal wells that are shaped to allow for even cooking of the flower-shaped waffle.

### DESCRIPTION OF THE DRAWINGS

The present invention is illustrated by way of example, and not by way of limitation.
FIG. 1A and FIG. 1B, each illustrates an isometric view of a cooking assembly 100 and flower-shaped waffles, according to certain embodiments of the invention;
FIG. 2 illustrates some flower-shaped waffles;
FIG. 3 is a top plan view of a lower plate of the cooking assembly, according to certain embodiments of the invention;
FIG. 4 is a cross-sectional view of the lower plate taken in the direction A-A as shown in FIG. 3;
FIG. 5 is a cross-sectional view of the lower plate taken in the direction C-C as shown in FIG. 3;
FIG. 6 is a cross-sectional view of the lower plate taken in the direction B-B as shown in FIG. 3;
FIG. 7 is an enlarged photographic isometric view of an upper plate of the cooking assembly, according to certain embodiments of the invention;
FIG. 8 is similar to FIG. 7 except that FIG. 8 is a line drawing that further illustrates some contour lines in the cavities of the upper plate;
FIG. 9A is a line drawing isometric view of a daisy-shaped waffle, according to certain embodiments of the invention;
FIG. 9B is a top plan view of the daisy-shaped waffle of FIG. 9A;
FIG. 9C is a cross-sectional view of the daisy-shaped waffle taken in the direction B-B as shown in FIG. 9B;
FIG. 10A is a photographic top isometric view of a daisy-shaped waffle, according to certain embodiments of the invention;
FIG. 10B is a photographic bottom isometric view of a daisy-shaped waffle, according to certain embodiments of the invention;
FIG. 11A is a line drawing isometric view of a rose-shaped waffle, according to certain embodiments of the invention;
FIG. 11B is a top plan view of the rose-shaped waffle of FIG. 11A;
FIG. 11C is a cross-sectional view of the rose-shaped waffle taken in the direction B-B as shown in FIG. 5B;
FIG. 12A is a photographic top isometric view of a rose-shaped waffle, according to certain embodiments of the invention;
FIG. 12B is a photographic bottom isometric view of a rose-shaped waffle, according to certain embodiments of the invention;
FIG. 13A is a line drawing isometric view of a sunflower-shaped waffle, according to certain embodiments of the invention;
FIG. 13B is a top plan view of the sunflower-shaped waffle of FIG. 13A;
FIG. 13C is a cross-sectional view of the sunflower-shaped waffle taken in the direction B-B as shown in FIG. 13B;
FIG. 14A is a photographic top isometric view of a sunflower-shaped waffle, according to certain embodiments of the invention; and
FIG. 14B is a photographic bottom isometric view of a sunflower-shaped waffle, according to certain embodiments of the invention.

### DETAILED DESCRIPTION OF THE PREFERRED EMBODIMENT

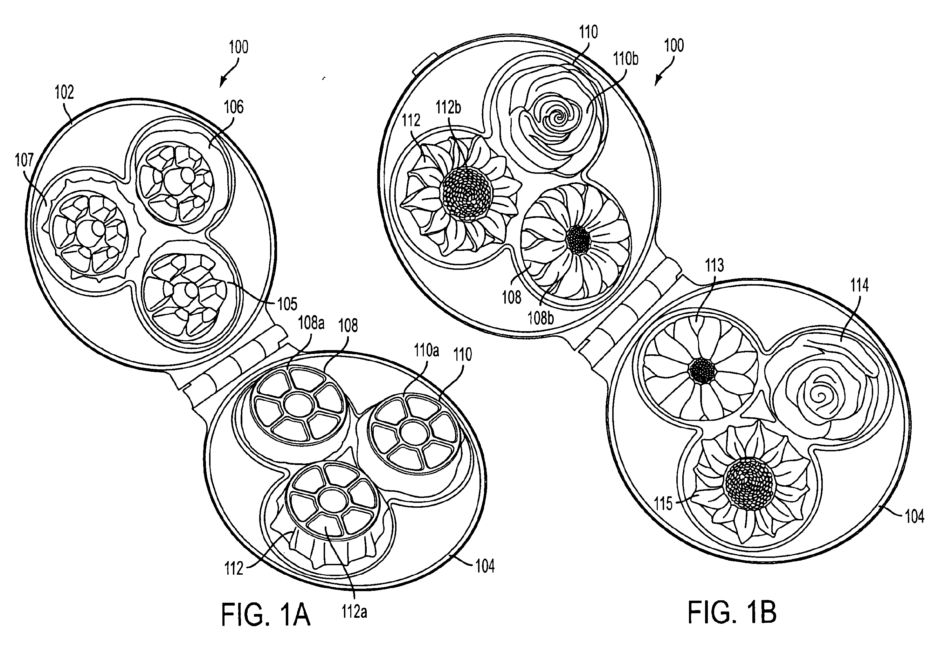

FIG. 1A and FIG. 1B, each illustrates an isometric view of a cooking assembly 100 and flower-shaped waffles, according to certain embodiments of the invention. FIG. 1 A and FIG. 1B show a cooking assembly 100 in an open position. Cooking assembly 100 includes an upper plate 102 and a lower plate 104. Upper plate 102 is receivable on lower plate 104 or vice versa when cooking assembly 100 is in a closed position.

As shown in FIG. 1A, upper plate 102 includes cavities 105, 106 and 107, according to certain embodiments. As shown in FIG. 1B, lower plate 104 includes flower-shaped cavities 113, 114 and 115. According to certain other embodiments, both upper plate 102 and lower plate 104 may include less than three cavities. According to yet other embodiments, both upper plate 102 and lower plate 104 may include more than three cavities.

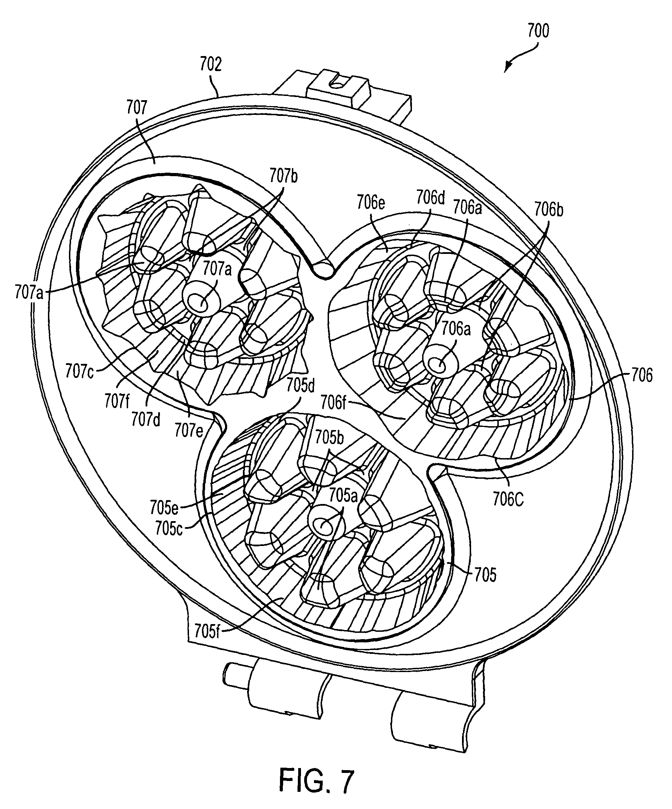

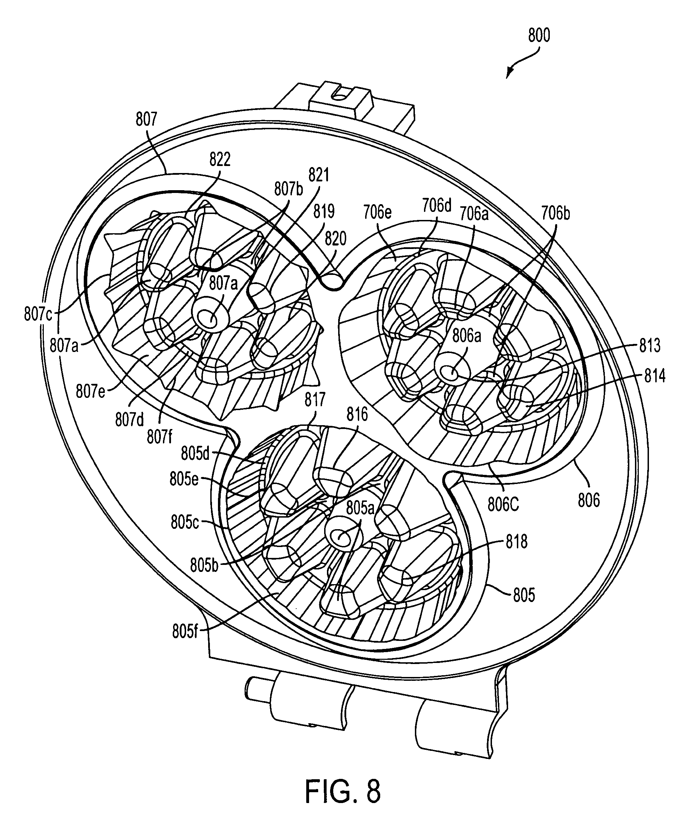

In FIG. 1A, each of cavities 105, 106 and 107 has a flower shape perimeter. Cavities 105, 106 and 107 include, within them, a plurality of protuberances. The protuberances are described in greater detail herein with reference to FIG. 7 and FIG. 8. Cavities 105, 106 and 107 of the upper plate is described in greater detail herein with reference to FIG. 7 and FIG. 8.

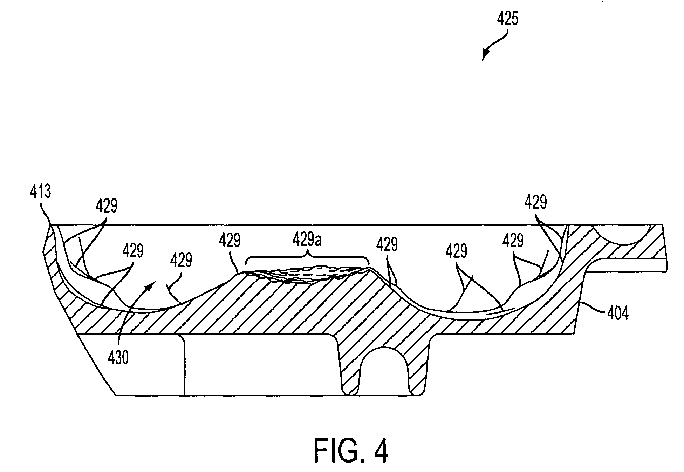

In FIG. 1B, each of cavities 113, 114 and 115 has a flower shape perimeter. Cavities 113, 114 and 115 include, within them, contoured surfaces for molding waffles into three-dimensional flower shapes. The contoured surfaces are described in greater detail herein with reference to FIG. 4, FIG. 5 and FIG. 6.

FIG. 1A further shows a bottom isometric view of baked waffles 108, 110, and 112 with bottom surfaces 108a, 110a, and 112a, respectively. FIG. 1B further shows a top isometric view of baked waffles 108, 110, and 112 with top surfaces 108b, 110b, and 112b, respectively.

To make flower-shaped waffles, the cavities of the lower plate 104 of the cooking assembly are filled with a suitable waffle batter. The cooking assembly is then closed by overlying and aligning the upper plate over the lower plate. The cooking assembly includes suitable heating and cooking mechanisms for cooking the waffles. According to certain embodiments, the cooking assembly automatically shuts off its cooking mechanism when the waffles are completely cooked. In certain other embodiments, the cooking assembly does not include heating or cooking mechanisms. In such embodiments, heat is applied to the cooking assembly in order to cook the waffles. In certain embodiments, the cooking assembly is adapted for baking boat-shaped waffles. In other embodiments, the cooking assembly is adapted for cooking flower-shaped waffles by steaming.

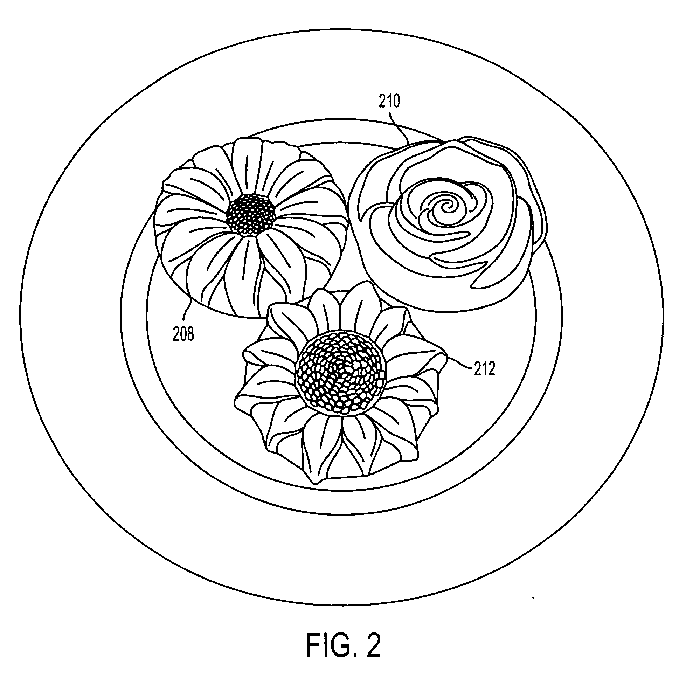

FIG. 2 illustrates some three-dimensional flower-shaped waffles. Illustrated in FIG. 2 are three-dimensional flower-shaped waffles 208, 210 and 212 made by using cooking assembly 200. Waffle 208 is daisy-shaped. Waffle 210 is rose-shaped. Waffle 212 is sunflower-shaped. The embodiments are not restricted to any particular flower shape. The type of flower shape can vary from implementation to implementation.

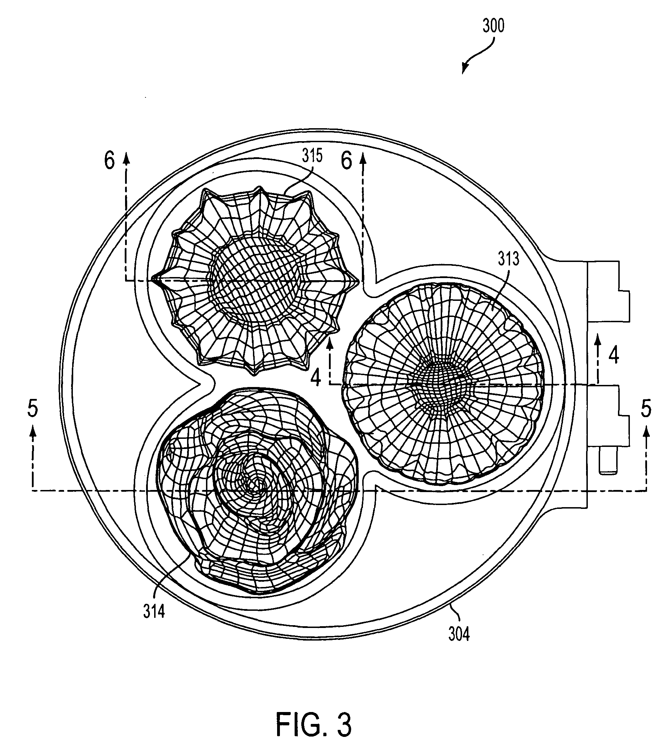

FIG. 3 is a top plan view of a lower plate of the cooking assembly for making flower-shaped waffles, according to certain embodiments of the invention. Top plan view 300 of lower plate 304 shows flower-shaped cavities 313, 314 and 315. Top plan view 300 also illustrates section lines A-A, B-B, C-C, for viewing various cross sections of lower plate 304 of the cooking assembly.

FIG. 4 is a cross-sectional view of the lower plate taken in the direction A-A as shown in FIG. 3. Cross sectional view 425 shows details of the daisy-shaped cavity 413 of the lower plate 404. The contoured surfaces such as contoured surfaces 429 and 429a within cavity 413 are such that a waffle can be molded to look like a three-dimensional daisy. Contoured surfaces 429 are generally for molding the petals for a three-dimensional daisy-shaped waffle. Contoured surfaces 429a are generally for molding the center portion for the three-dimensional daisy-shaped waffle. When making a three-dimensional daisy-shaped waffle, waffle batter can be poured into the air space 430 of cavity 413.

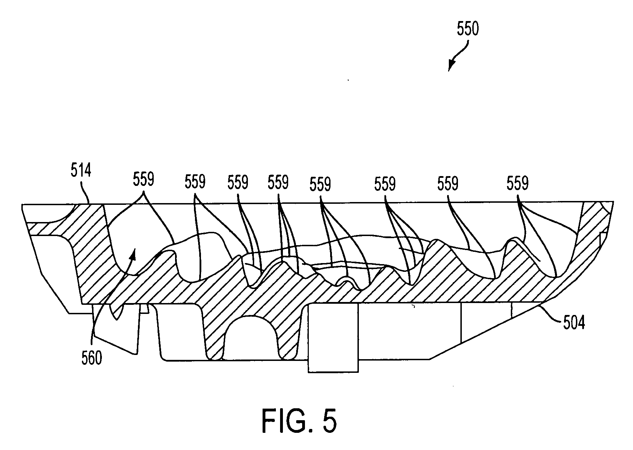

FIG. 5 is a cross-sectional view of the lower plate taken in the direction C-C as shown in FIG. 3. Cross sectional view 550 shows details of the rose-shaped cavity 514 of the lower plate 504. The contoured surfaces such as contoured surfaces 559 within cavity 514 are such that a waffle can be molded to look like a three-dimensional rose. Contoured surfaces 559 are generally for molding the petals for a three-dimensional rose-shaped waffle. When making a three-dimensional rose-shaped waffle, waffle batter can be poured into the air space 560 of cavity 514.

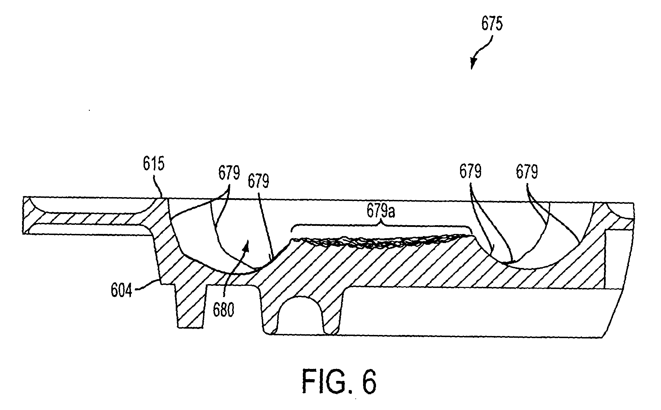

FIG. 6 is a cross-sectional view of the lower plate taken in the direction B-B as shown in FIG. 3. Cross sectional view 675 shows details of the sunflower-shaped cavity 615 of the lower plate 604. The contoured surfaces such as contoured surfaces 679 and 679a within cavity 615 are such that a waffle can be molded to look like a three-dimensional sunflower. Contoured surfaces 679 are generally for molding the petals for a three-dimensional sunflower-shaped waffle. Contoured surfaces 679a are generally for molding the center portion for the three-dimensional sunflower-shaped waffle. When making a three-dimensional sunflower-shaped waffle, waffle batter can be poured into the air space 680 of cavity 615.

FIG. 7 is an enlarged photographic isometric view of an upper plate of the cooking assembly, according to certain embodiments of the invention. The isometric view 700 of FIG. 7 shows upper plate 702. Upper plate 702 includes cavities 705, 706 and 707.

Cavity 705 includes protuberances, such as protuberances 705a. Such protuberances are separated by spaces or grooves, such as grooves 705b. Cavity 705 includes a flower-shaped top perimeter 705c, and a sloped inner wall 705e. Sloped inner wall 705e is sloped at an angle such that an imaginary line 705f running from top perimeter 705c to a bottom edge 705d makes a small angle with an imaginary plane that is perpendicular to the horizontal plane of upper plate 702. The small angle is such that when a waffle is baked in cavity 705, the baked waffle can be easily detached from cavity 705 in order to preserve the general structural integrity of the baked waffle.

Cavity 706 includes protuberances, such as protuberances 706a. Such protuberances are separated by spaces or grooves, such as grooves 706b. Cavity 706 includes a flower-shaped top perimeter 706c, and a sloped inner wall 706e. Sloped inner wall 706e is sloped at an angle such that an imaginary line 706f running from top perimeter 706c to a bottom edge 706d makes a small angle with an imaginary plane that is perpendicular to the horizontal plane of upper plate 702. The small angle is such that when a waffle is baked in cavity 706, the baked waffle can be easily detached from cavity 706 in order to preserve the general structural integrity of the baked waffle.

Cavity 707 includes protuberances, such as protuberances 707a. Such protuberances are separated by spaces or grooves, such as grooves 707b. Cavity 707 includes a flower-shaped top perimeter 707c, and a sloped inner wall 707e. Sloped inner wall 707e is sloped at an angle such that an imaginary line 707f running from top perimeter 707c to a bottom edge 707d makes a small angle with an imaginary plane that is perpendicular to the horizontal plane of upper plate 702. The small angle is such that when a waffle is baked in cavity 707, the baked waffle can be easily detached from cavity 707 in order to preserve the general structural integrity of the baked waffle.

FIG. 8 is similar to FIG. 7 except that FIG. 8 is a line drawing that further illustrates some contour lines in the cavities of upper plate 802. The isometric view 800 of FIG. 8 shows upper plate 802. Upper plate 802 includes cavities 805, 806 and 807. Examples of contour lines are contour lines 811, 812, 813, 814, 816, 817, 818, 819, 820, 821, and 822.

Cavity 805 includes protuberances, such as protuberances 805a. Such protuberances are separated by spaces or grooves, such as grooves 805b. Cavity 805 includes a flower-shaped top perimeter 805c, and a sloped inner wall 805e. Sloped inner wall 805e is sloped at an angle such that an imaginary line 805f running from top perimeter 805c to a bottom edge 805d makes a small angle with an imaginary plane that is perpendicular to the horizontal plane of upper plate 802. The small angle is such that when a waffle is baked in cavity 805, the baked waffle can be easily detached from cavity 805 in order to preserve the general structural integrity of the baked waffle.

Cavity 806 includes protuberances, such as protuberances 806a. Such protuberances are separated by spaces or grooves, such as grooves 806b. Cavity 806 includes a flower-shaped top perimeter 806c, and a sloped inner wall 806e. Sloped inner wall 806e is sloped at an angle such that an imaginary line 806f running from top perimeter 806c to a bottom edge 806d makes a small angle with an imaginary plane that is perpendicular to the horizontal plane of upper plate 802. The small angle is such that when a waffle is baked in cavity 806, the baked waffle can be easily detached from cavity 806 in order to preserve the general structural integrity of the baked waffle.

Cavity 807 includes protuberances, such as protuberances 807a. Such protuberances are separated by spaces or grooves, such as grooves 807b. Cavity 807 includes a flower-shaped top perimeter 807c, and a sloped inner wall 807e. Sloped inner wall 807e is sloped at an angle such that an imaginary line 807f running from top perimeter 807c to a bottom edge 807d makes a small angle with an imaginary plane that is perpendicular to the horizontal plane of upper plate 802. The small angle is such that when a waffle is baked in cavity 807, the baked waffle can be easily detached from cavity 807 in order to preserve the general structural integrity of the baked waffle.

The protuberances, such as protuberances 805a, 806a and 807a are sized and shaped in a manner to allow the three-dimensional flower-shaped waffles to cook evenly. Further, the protuberances are sized and shaped based on factors including: 1) the type of flower shape, and 2) the contoured surfaces that define top surface (that form the petals) of the three-dimensional flower-shaped waffle.

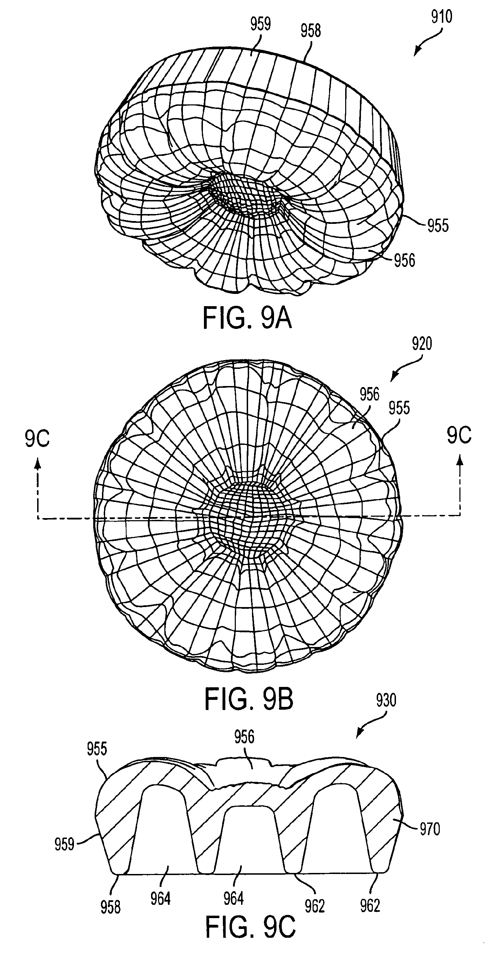

FIG. 9A is a line drawing isometric view of a daisy-shaped waffle, according to certain embodiments of the invention. Isometric view 910 shows a daisy-shaped waffle 955 with a top surface 956, a base 958 and a sloped-wall 959.

FIG. 9B is a top plan view of the daisy-shaped waffle of FIG. 9A. Top plan view 920 shows daisy-shaped waffle 955 with top surface 956 and section lines B-B for viewing a cross section of daisy-shaped waffle 955.

FIG. 9C is a cross-sectional view of the daisy-shaped waffle taken in the direction B-B as shown in FIG. 9B. Cross-sectional view 930 of daisy-shaped waffle 955 shows sloped-wall 959, base 958, ridges 962, wells 964, top surface 956. The cross-hatched section 970 represents the solid areas of the waffle. Wells 964 are the negatives of the protuberances in the upper plate daisy-shape cavity of the cooking assembly as described herein. Surface 956 is the negative of the contoured surfaces of the lower plate daisy-shape cavity of the cooking assembly as described herein.

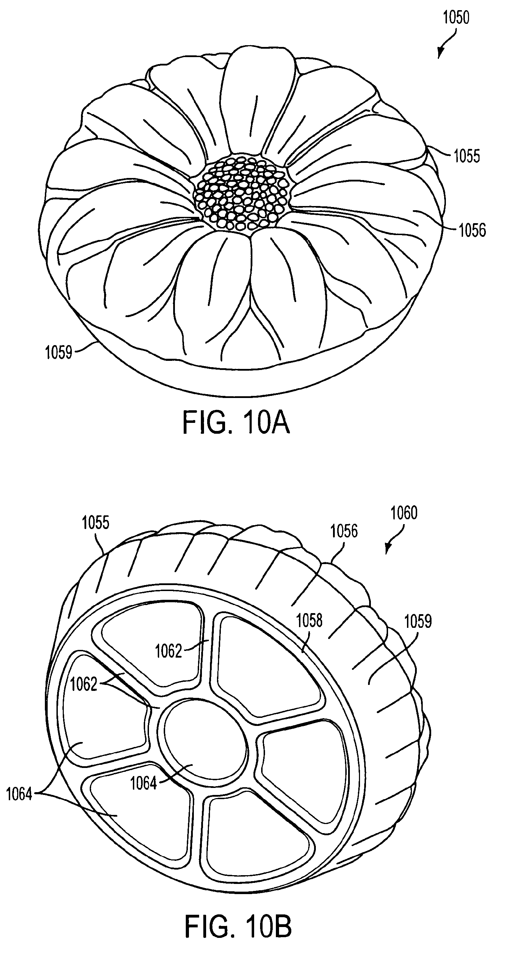

FIG. 10A is a photographic top isometric view of a daisy-shaped waffle, according to certain embodiments of the invention. Isometric view 1050 shows a daisy-shaped waffle 1055 with a top surface 1056, a base 1058 and a sloped-wall 1059. Top surface 1056 is contoured to resemble petals and stamens of a daisy.

FIG. 10B is a photographic bottom isometric view of a daisy-shaped waffle, according to certain embodiments of the invention. Isometric view 1060 shows a daisy-shaped waffle 1055 with top surface 1056, base 1058, sloped-wall 1059, ridges 1062, and wells 1064.

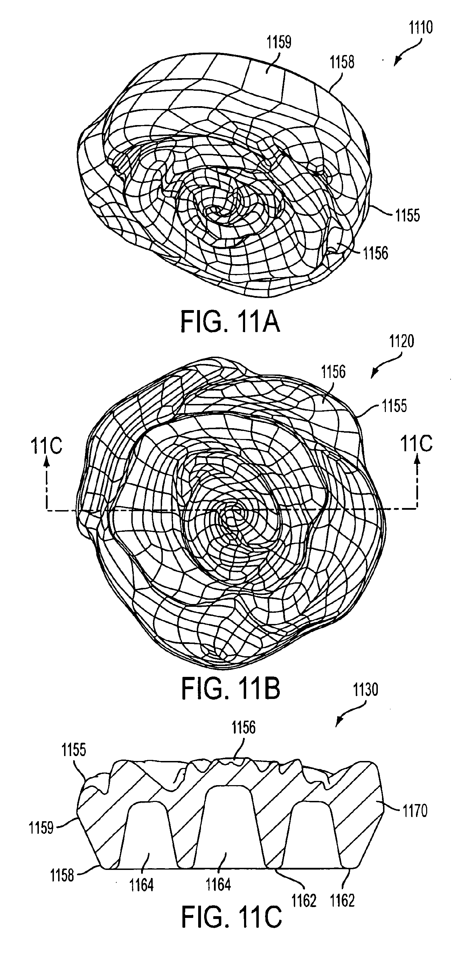

FIG. 11A is a line drawing isometric view of a rose-shaped waffle, according to certain embodiments of the invention. Isometric view 1110 shows a rose-shaped waffle 1155 with a top surface 1156, a base 1158 and a sloped-wall 1159.

FIG. 11 B is a top plan view of the rose-shaped waffle of FIG. 11A. Top plan view 1120 shows rose-shaped waffle 1155 with top surface 1156 and section lines B-B for viewing a cross section of rose-shaped waffle 1155.

FIG. 11 C is a cross-sectional view of the rose-shaped waffle taken in the direction B-B as shown in FIG. 11 B. Cross-sectional view 1130 of rose-shaped waffle 1155 shows sloped-wall 1159, base 1158, ridges 1162, wells 1164, top surface 1156. The cross-hatched section 1170 represents the solid areas of the waffle. Wells 1164 are the negatives of the protuberances in the upper plate rose-shape cavity of the cooking assembly as described herein. Surface 1156 is the negative of the contoured surfaces of the lower plate rose-shape cavity of the cooking assembly as described herein.

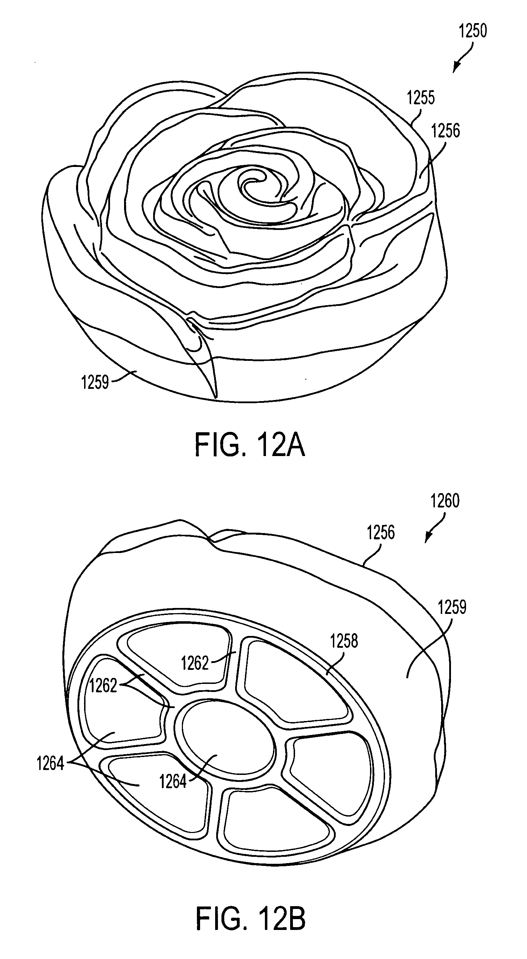

FIG. 12A is a photographic top isometric view of a rose-shaped waffle, according to certain embodiments of the invention. Isometric view 1250 shows a rose-shaped waffle 1255 with a top surface 1256, a base 1258 and a sloped-wall 1259. Top surface 1256 is contoured to resemble petals of a rose.

FIG. 12B is a photographic bottom isometric view of a rose-shaped waffle, according to certain embodiments of the invention. Isometric view 1260 shows a rose-shaped waffle 1255 with top surface 1256, base 1258, sloped-wall 1259, ridges 1262, and wells 1264.

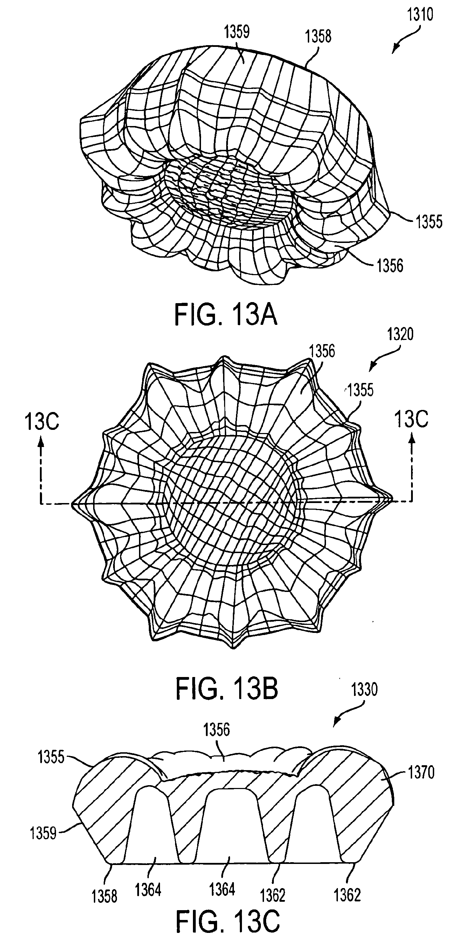

FIG. 13A is a line drawing isometric view of a sunflower-shaped waffle, according to certain embodiments of the invention. Isometric view 1310 shows a sunflower-shaped waffle 1355 with a top surface 1356, a base 1358 and a sloped-wall 1359.

FIG. 13B is a top plan view of the sunflower-shaped waffle of FIG. 13A. Top plan view 1320 shows sunflower-shaped waffle 1355 with top surface 1356 and section lines B-B for viewing a cross section of sunflower-shaped waffle 1355.

FIG. 13C is a cross-sectional view of the sunflower-shaped waffle taken in the direction B-B as shown in FIG. 13B. Cross-sectional view 1330 of sunflower-shaped waffle 1355 shows sloped-wall 1359, base 1358, ridges 1362, wells 1364, top surface 1356. The cross-hatched section 1370 represents the solid areas of the waffle. Wells 1364 are the negatives of the protuberances in the upper plate sunflower-shape cavity of the cooking assembly as described herein. Surface 1356 is the negative of the contoured surfaces of the lower plate sunflower-shape cavity of the cooking assembly as described herein.

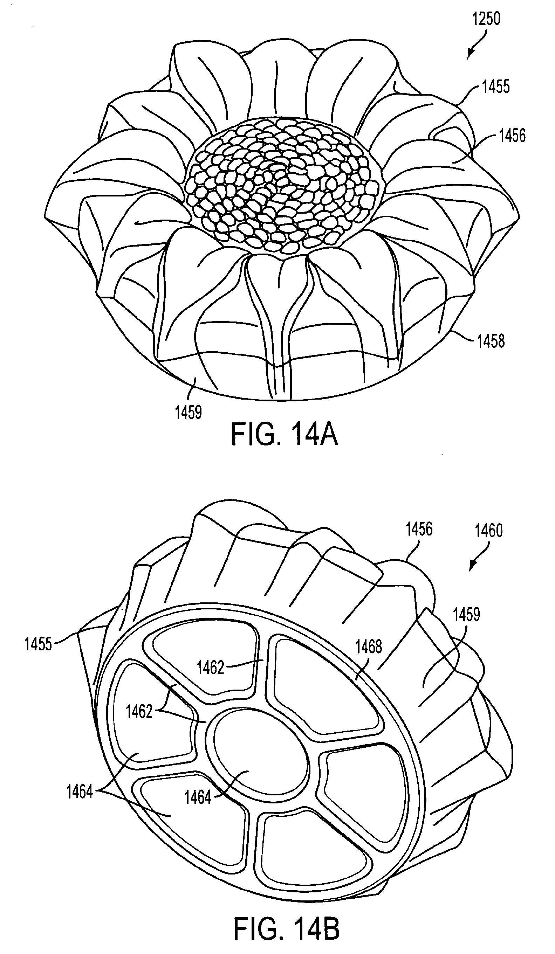

FIG. 14A is a photographic top isometric view of a sunflower-shaped waffle, according to certain embodiments of the invention. Isometric view 1450 shows a sunflower-shaped waffle 1455 with a top surface 1456, a base 1458 and a sloped-wall 1459. Top surface 1456 is contoured to resemble petals and stamens of a sunflower.

FIG. 14B is a photographic bottom isometric view of a sunflower-shaped waffle, according to certain embodiments of the invention. Isometric view 1460 shows a sunflower-shaped waffle 1455 with top surface 1456, base 1458, sloped-wall 1459, ridges 1462, and wells 1464.

In the foregoing specification, embodiments of the invention have been described with reference to numerous specific details that may vary from implementation to implementation. The specification and drawings are, accordingly, to be regarded in an illustrative rather than a restrictive sense.

## Claims

1. A method for making a cooking appliance for cooking waffles, the method comprising:
forming a first plate with at least one first cavity;
forming within said at least one first cavity contoured surfaces for defining a three dimensional flower-shaped waffle;
forming a second plate with at least one second cavity; and
forming within said at least one second cavity a plurality of protuberances separated by a plurality of grooves.

2. The method of Claim 1, further comprising sizing and shaping said plurality of protuberances suitable for allowing even cooking of said flower-shaped waffle.

3. The method of Claim 1, further comprising shaping said at least one first cavity into having a flower-shaped perimeter.

4. The method of Claim 1, further comprising adapting said second plate to be receivable by said first plate when said cooking appliance is in a closed position.

5. The method of Claim 1, wherein said at least one second cavity is substantially aligned with said at least one first cavity when said first plate is positioned over said second plate in a closed position.

6. The method of Claim 1, wherein said plurality of protuberances are approximately pyramidal in shape.

7. The method of Claim 1, further comprising adapting a top perimeter of said at least one second cavity is greater than a bottom perimeter of said at least one second cavity.

8. A cooking assembly for making waffles, the cooking assembly comprising:
a means for cooking a first portion of at least one flower-shaped waffle;
a means for cooking a second portion of said at least one flower-shaped waffle; and
wherein said means for cooking said first portion includes means for defining a three dimensional flower-shaped waffle.

9. The cooking assembly of Claim 8, further comprising means for allowing said means for cooking said first portion to be receivable by said means for cooking said second portion when said cooking assembly is in a closed position.

10. The cooking assembly of Claim 8, wherein said means for cooking said first portion is substantially aligned with said means for cooking said second portion when said means for cooking said first portion is positioned over said means for cooking said second portion in a closed position.

11. The cooking assembly of Claim 8, further comprising means for forming a plurality of pyramidal wells on a surface of said second portion of said at least one flower-shaped waffle.

12. The cooking assembly of Claim 8, wherein said means for cooking said second portion has a top perimeter that is greater than a bottom perimeter of said means for cooking said second portion.

13. A cooking assembly for making waffles, the cooking assembly comprising:
a first plate with at least one first cavity;
a plurality of contoured surfaces within said at least one first cavity for defining a three dimensional flower-shaped waffle;
a second plate with at least one second cavity; and
a plurality of protuberances separated by a plurality of grooves within said at least one second cavity, wherein said plurality of protuberances are sized and shaped for allowing even cooking of said flower-shaped waffle.

14. The cooking assembly of Claim 13, wherein said at least one first cavity has a flower-shaped perimeter.

15. The cooking assembly of Claim 13, wherein said second plate is receivable by said first plate when said cooking assembly is in a closed position.

16. The cooking assembly of Claim 13, wherein said at least one second cavity is substantially aligned with said at least one first cavity when said first plate is positioned over said second plate in a closed position.

17. The cooking assembly of Claim 13, wherein said plurality of protuberances are approximately pyramidal in shape.

18. The cooking assembly of Claim 13, wherein a top perimeter of said at least one second cavity is greater than a bottom perimeter of said at least one second cavity.
